## Europäisches Patentamt

## European Patent Office

## Office européen des brevets

(19)

(11) Veröffentlichungsnummer: **0 170 077**
**B1**

(12) **EUROPÄISCHE PATENTSCHRIFT**

(45) Veröffentlichungstag der Patentschrift:
03.02.88

(21) Anmeldenummer: 85108165.3

(22) Anmeldetag: 02.07.85

(51) Int. Cl.⁴: **H 01 H 9/02,** F 02 D 11/10,
**B 60 K 31/00**

(54) Verfahren zum Positionieren eines einem Geschwindigkeitsbegrenzer zugeordneten Schalters.

(30) Priorität: 25.07.84 DE 3427329

(43) Veröffentlichungstag der Anmeldung:
05.02.86 Patentblatt 86/6

(45) Bekanntmachung des Hinweises auf die Patenterteilung:
03.02.88 Patentblatt 88/5

(84) Benannte Vertragsstaaten:
DE FR GB IT SE

(56) Entgegenhaltungen:
EP-A-0 007 592
FR-A-2 309 365
US-A-4 453 517

(73) Patentinhaber: Mannesmann Kienzle GmbH,
Heinrich- Hertz- Strasse, D-7730 Villingen-
Schwenningen (DE)

(72) Erfinder: Donner, Bernd, Erlenweg 14, D-7772
Uhldingen- Mühlhofen 3 (DE)
Erfinder: Schultze, Hartmut, Oscar- Joos- Strasse
1, D-7730 Villingen- Schwenningen (DE)
Erfinder: Jähnig, Lutz, Dr., Schanzenweg 24,
D-7730 Villingen- Schwenningen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 170 077 B1

## Beschreibung

Die Erfindung betrifft ein Verfahren zum Positionieren eines einem Geschwindigkeitsbegrenzer zugeordneten Schalters, welcher den Stellmotor des Geschwindigkeitsbegrenzers, der über ein Stellglied eine in die getriebliche Verbindung zwischen dem Gaspedal und der Kraftstoffzumeßvorrichtung eines Fahrzeuges eingeschaltete Koppeleinrichtung betätigt, dann abschaltet, wenn beim Abregelvorgang eine bestimmte, untere Grenzdrehzahl des Fahrzeugmotors, spätestens jedoch der maximale, durch die Koppeleinrichtung ermöglichte Relativhub zwischen Gaspedal und Kraftstoffzumeßvorrichtung erreicht ist.

Die Leistung moderner Fahrzeugantriebe ist im allgemeinen so dimensioniert, daß sie auch bei extremen Belastungen durch Ladung und Steigungen oder widrigen Straßenverhältnissen zufriedenstellt, d.h. Reserve aufweist. Dies bedeutet andererseits, daß sie auf ebenen Straßen oder bei leichtem Gefälle relativ hohe Geschwindigkeiten zuläßt. Parallel hierzu setzt sich in neuerer Zeit mehr und mehr die Erkenntnis durch, daß der Einsatz von Geschwindigkeitsbegrenzern wenigstens in Nutzfahrzeugen schon deshalb sinnvoll sei, weil ein Geschwindigkeitsbegrenzer einerseits den Berufsfahrer, der in den meisten Fällen unter dem Zwang steht, einen Transportauftrag so schnell wie möglich durchzuführen, bei seiner oft stundenlangen, monotonen Fahrtätigkeit von der ständigen Kontrolle der Geschwindigkeit seines Fahrzeuges im Grenzbereich einer für den befahrenen Straßentyp zulässigen Geschwindigkeit entlastet, andererseits bezüglich Kraftstoffbedarf und Materialverschleiß einen wirtschaftlichen Fahrzeugbetrieb erzwingt und gleichzeitig dem Fahrer einen weiten, individuellen Fahrstilspielraum unterhalb des Begrenzungswertes freihält. Dabei erfolgt mit einem an sich bewährten und auch für den nachträglichen Einbau geeigneten Geschwindigkeitsbegrenzungssystem gemäß der Gattung des Hauptanspruches, wenn die Begrenzungsgeschwindigkeit erreicht wird und der Abregelvorgang einsetzt, weder eine nennenswerte, unangenehme Rückwirkung auf das Gaspedal, noch ist der Fahrbetrieb durch Regelschwingungen des Fahrzeuges beeinträchtigt. Darüber hinaus stellt ein Geschwindigkeitsbegrenzungssystem im Gegensatz zu Vorschriften und Geboten ein aktives und verläßliches und somit, auch wenn es eine gewisse Beschränkung des persönlichen Fahrstils zur Folge hat, akzeptables Sicherheitssystem für den Fahrer und die übrigen Verkehrsteilnehmer dar. Mit anderen Worten, das technische Hilfsmittel Geschwindigkeitsbegrenzer macht Gleichgültigkeit, Gewöhnung an überhöhte Geschwindigkeit und dergl. Fahrfehler unschädlich, d.h. es ist ein wirksames Mittel, Unfallrisiken einzuschränken.

Trotz dieser Vorzüge ist die Bereitschaft, ein solches Geschwindigkeitsbegrenzungssystem zu verwenden, relativ gering. Ausschlaggebend hierfür ist jedoch nicht mangelnde Einsicht in Wert und Zweckmäßigkeit eines Geschwindigkeitsbegrenzungssystems, sondern einerseits die Sorge, daß bei Ausfall des Systems das betreffende Fahrzeug manövrierunfähig liegenbleibt, andererseits das Problem, daß insbesondere ein Nachrüsten eines Fahrzeuges mit einem Geschwindigkeitsbegrenzungssystem einen außergewöhnlich umständlichen und zeitraubenden Eingriff erforderlich macht.

Dabei handelt es sich, auch wenn diese Montage im Motorraum vorgenommen werden muß, weniger darum, die Koppeleinrichtung, die eine Veränderung der getrieblichen Verbindung zwischen dem Gaspedal und der Kraftstoffzumeßvorrichtung ermöglicht, in diese Getriebeverbindung, d.h. in den betreffenden Gaszug bzw. das Gasgestänge einzufügen und das Stellaggregat, das über einen Bowdenzug mit der Koppeleinrichtung verbunden ist, an einer geeigneten Stelle am Fahrzeugchassis anzubringen und unter Umständen im Fahrerhaus eine elektronische Steuereinheit zu installieren, sondern vielmehr darum, einen vorzugsweise in dem Stellaggregat befindlichen Schalter, mittels dessen der Stellmotor in einer bestimmten Endposition des Schaltgliedes abschaltbar ist, zu justieren. Ein solcher Schalter ist erforderlich, weil in der Regel das Gasgestänge wischen Leer- und Vollgasstellung durch mechanische Anschläge begrenzt ist und bei voller Nutzung des möglichen Verstellhubes die Gefahr besteht, daß Beschädigungen beispielsweise auch des Stellmotors auftreten, d.h. der Schalter hat, um Beschädigungen zu vermeiden, die Aufgabe, den Stell- bzw. Abregelvorgang rechtzeitig und selbsttätig abzuschalten.

Das Positionieren des Schalters kann, je nachdem, wo im Motorraum das Stellaggregat insbesondere bei nachträglichem Einbau angeordnet werden konnte, außerordentlich mühsam sein, muß bei geöffnetem Stellaggregat mehrfach wiederholt und kontrolliert werden und läßt sich im allgemeinen von einer Person nicht durchführen. Besondere Schwierigkeiten sind verständlicherweise dann gegeben, wenn der Motor des Fahrzeuges nur durch Abkippen des Fahrerhauses zugänglich ist, zwischen dem Positioniereingriff und dessen Kontrolle das Fahrzeug jeweils wieder in einen fahrbereiten Zustand gebracht werden muß und dabei, d.h. zwischen dem fahrbereiten Zustand des Fahrzeuges und dem Zustand, in dem das Fahrerhaus abgekippt ist, unterschiedliche Hebelverhältnisse des Gasgestänges zu beachten sind. Hinzu kommt, daß für die das Gas steuernde getriebliche Verbindung zwischen Gaspedal und Kraftstoffzumeßvorrichtung je nach Fahrzeugtyp unterschiedliche konstruktive Lösungen und ungleiche maximale Gaswege gegeben sein können, so daß das unter deratigen Bedingungen durchzuführende Positioneren eines Schalters auch bezüglich seiner Genauigkeit mangelhaft sein muß.

Der Erfindung lag somit die Aufgabe zugrunde, die Positionierarbeit für den den Abregelvorgang begrenzenden Schalter zu vereinfachen, gleichzeitig aber auch die Positionierqualität zu verbessern.

Die Lösung dieser Aufgabe sieht ein Verfahren mit folgenden Schritten vor:

a) Starten des Fahrzeugmotors,

b) Treten des Gaspedals bis zur Vollgasstellung und Halten des Gaspedals in der Vollgasstellung bei gleichzeitigem Verstellen des Stellgliedes im Sinne einer Drosselung des Fahrzeugmotors durch Ansteuern des Stellmotors mittels eines Tastschalters und Beobachten einer Drehzahlanzeige,

c) Austasten eines einer bestimmten unteren Grenzdrehzahl des Fahrzeugmotors entsprechenden Stellgliedhubes,

d) Freigabe einer Verriegelung des von dem Stellglied mitgeschleppten Schalters durch Umsteuern der Drehrichtung des Stellmotors.

Eine bevorzugte Anordnung zur Durchführung des Verfahrens ist dadurch gekennzeichnet, daß der Tastschalter, ein flexibles Kabel und ein Stecker eine geräteunabhängige Betätigungseinheit bilden, daß in einer der elektronischen Steuereinheit des Geschwindigkeitsbegrenzers eine dem Stecker zugeordnete, plombierbare Aufnahme vorgesehen ist und daß bei gesetztem Stecker der Rücklauf des Stellmotors gesperrt und der Vorlauf mittels des Tastschalters steuerbar ist.

Die bevorzugte Anordnung sieht ferner vor, daß der Schalter auf einem parallel zu einer vom Stellmotor angetriebenen und das Stellglied tragenden Gewindespindel verschiebbar gelagerten Schlitten angeordnet ist, daß dem Schlitten Verriegelungsmittel zugeordnet sind, daß auf dem Schlitten ein in Reihe mit dem Schalter geschalteter Umschaltkontaktsatz angeordnet ist und daß beim Positionieren des Schalters mittels des Tastschalters das Stellglied derart an dem Schlitten angreift, daß der Schalter betätigt, der Stromkreis des Schalters über den Umschaltkontaktsatz unterbrochen ist und die Verriegelungsmittel unwirksam sind.

Eine vorteilhafte Ausführungsform ist dadurch gekennzeichnet, daß an dem Schlitten wenigstens ein Riegel senkrecht zur Transportrichtung des Schlittens bewegbar, gefedert gelagert ist, daß der Riegel derart ausgebildet ist, daß er mit einem am Stellglied ausgebildeten Mitnehmer kuppelbar ist und daß die Umschaltkontaktfeder des Kontaktsatzes in die senkrecht zur Transportrichtung des Schlittens gerichtete Bewegungsbahn des Riegels eingreift.

Die Erfindung bietet den entscheidenden Vorteil, daß das Positionieren des Schalters in einem Zuge ohne ein manuelles Eingreifen in das Stellaggregat vorgenommen werden kann, und zwar bei verschlossenem und letztlich plombierten Stellaggregat sozusagen ferngesteuert aus dem Fahrerhaus heraus. Erwähnenswert ist ferner, daß hierfür nur eine Person erforderlich ist, die sich in fahrbereiter Sitzposition im Fahrerhaus befindet und daß mit relativ geringem fertigungstechnischem Aufwand eine hochgenaue Positionierung erzielbar ist.

Im folgenden sei die Erfindung anhand der beigefügten Zeichnungen näher erläutert.

Es zeigen

FIG. 1 eine Übersichtsdarstellung der Komponenten eines Geschwindigkeitsbegrenzers sowie deren Zuordnung zum Gasgestänge eines Fahrzeuges,

FIG. 2 einen Diagrammausschnitt mit einer die Wirkung eines Geschwindigkeitsbegrenzers demonstrierenden Geschwindigkeitsaufzeichnung,

FIG. 3 eine Draufsicht eines bevorzugten Ausführungsbeispiels eines Stellaggregates des Geschwindigkeitsbegrenzers in einer Ausgangsstellung bezüglich des zu positionierenden Schalters,

FIG. 4 einen Querschnitt des in FIG. 3 dargestellten Stellaggregates,

FIG. 5 einen Teilschnitt des Stellaggregates mit einer Seitenansicht des den Schalter tragenden Schlittens in Ausgangsstellung,

FIG. 6 eine Seitenansicht des positionierten Schlittens,

FIG. 7 eine Schaltung zum Betrieb des Stellmotors, abhängig von der Stellung des Stellgliedes.

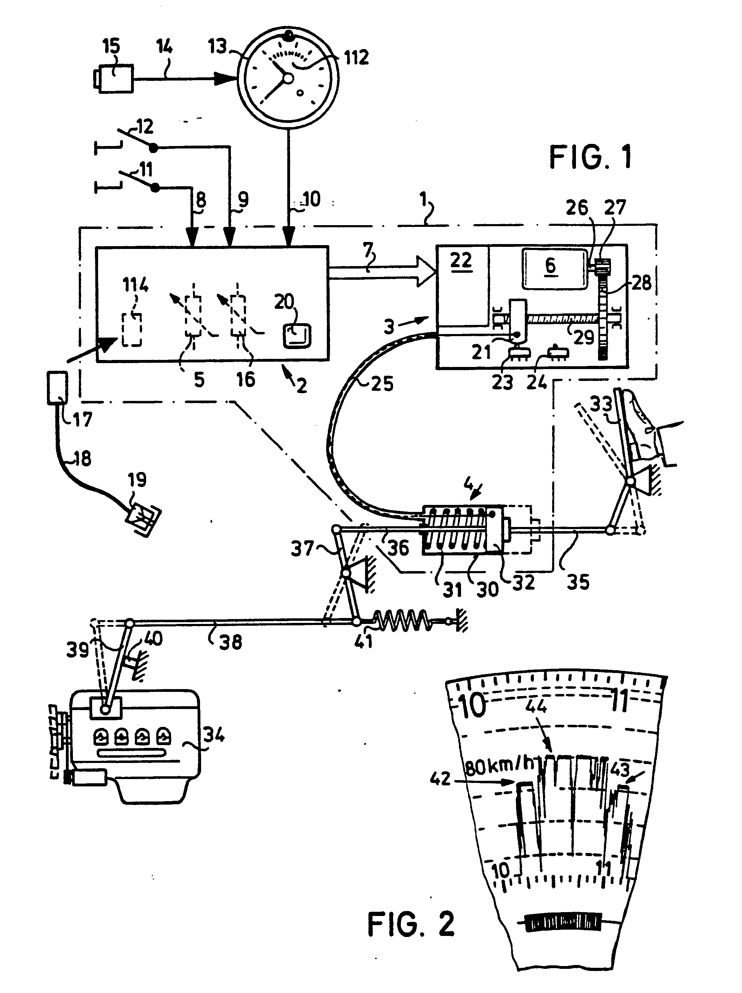

Die Erfindung ist, wie aus der Übersichtsdarstellung FIG. 1 ersichtlich ist, in einem Geschwindigkeitsbegrenzer 1 realisiert, welcher im wesentlichen aus einer beispielsweise im Fahrerhaus installierten elektronischen Steuereinheit 2, einem vorzugsweise am Fahrzeugchassis befestigten elektromechanischen Stellaggregat 3 und einer in das Gasgestänge des Fahrzeuges eingefügten mechanischen Koppeleinrichtung 4 besteht. Dabei ist es die Aufgabe der Steuereinheit 2, einen mittels eines Potentiometers 5 fest eingestellten Geschwindigkeitsgrenzwert mit der tatsächlichen Geschwindigkeit des Fahrzeuges zu vergleichen und spätestens beim Überschreiten des Grenzwertes einem im Stellaggregat 3 befindlichen Stellmotor 6 über eine Leitung 7 ein entsprechendes Signal im Sinne einer Drosselung des Fahrzeugmotors zuzuführen.

Eingangsseitig ist die elektronische Steuereinrichtung 2 über Leitungen 8, 9 und 10 mit Schaltern 11 und 12 sowie mit einem Fartschreiber 13, dem seinerseits in an sich üblicher Weise über eine Leitung 14 ein Drehwertgeber 15 zugeordnet ist, verbunden. Mit dem vorzugsweise im Armaturenbrett angeordneten Schalter 11 ist ein zweiter mittels eines weiteren Potentiometers 18 einstellbarer Geschwindigkeitsgrenzwert anwählbar. Der Schalter 12 ist der Fahrzeugkupplung zugeordnet und dient beispielsweise der Gasfreigabe bei Fahrzeugen mit nicht synchronisierten Getrieben, während der Fahrtschreiber 13, vorausgesetzt er ist entsprechend ausgerüstet, über die Leitung 10 bereits drehzahl-weg-gewandelte Geschwindigkeitsmeßimpulse liefert. Selbstverständlich wäre anstelle des Fahrtschreibers 13 auch ein entsprechend ausgestatteter Geber einsetzbar. Denkbar ist ferner, daß die Weg-Drehzahl-Anpassung in der Steuereinheit 2 selbst vorgenommen wird. Außerdem ist ein mit einem Stecker 17 und einer flexiblen Leitung 18 versehener Tastschalter 19 vorgesehen, der, wenn der erfindungsgemäße Justiermodus gestartet werden soll, was im folgenden noch näher beschrieben wird, mit der elektronischen Steuereinheit 2 verbunden wird. Mit 20 ist eine Taste bezeichnet, mit der zu Service und Testzwecken ein weiterer, relativ niedriger Geschwindigkeitsgrenzwert anwählbar ist.

Aus der FIG. 1 geht ferner hervor, daß in dem Stellaggregat 3 außer dem Motor 6 eine den Motor 6 abhängig von der Stellung eines Stellgliedes 21 steuernde Schaltung 22 und wenigstens zwei durch das Stellglied 21 betätigbare Schalter 23 und 24 angeordnet sind, welche einerseits die Nullposition (Schalter 23), andererseits die Endposition (Schalter 24) des Geschwindigkeitsbegrenzers 1 festlegen. Der Antrieb des Stellgliedes 21, an dem das eine Ende der Seele eines Bowdenzuges 25 angelenkt ist, erfolgt, ausgehend von einem auf der Welle 26 des Stellmotors 6 befestigten Zahnrad 27 und einem mit diesem in Eingriff stehenden Zahnrad 28 mittels einer Gewindespindel 29, die verdrehfest mit dem Zahnrad 28 verbunden ist. Das andere Ende der Bowdenzugseele greift an der Koppeleinrichtung 4 an, genauer gesagt an einem in einem Zylinder 30 geführten und unter der Wirkung einer Druckfeder 31 stehenden Kolben 32. Dabei ist die Koppeleinrichtung 4 derart in eine Zugstange des Hebelgetriebes zwischen einem beispielsweise als Trittplatte 33 ausgebildeten Gas- bzw. Fahrpedals und der Kraftstoffzumeßvorrichtung des Fahrzeugmotors 34 eingefügt, daß der eine Teil 35 der Zugstange mit dem Zylinder 30 und der andere Teil 36 mit dem Kolben 32 fest verbunden sind. Mit 37 ist ein schwenkbar gelagerter, zweiarmiger Hebel des Gasgestänges bezeichnet, der zusammen mit einer weiteren Zugstange 38 die getriebliche Verbindung mit einem üblicherweise an der Einspritzpumpe des Fahrzeugmotors 34 angeordneten Verstellhebel 39 herstellt. Dem beschriebenen Gasgestänge sind ferner ein Anschlag 40 und eine Rückstellfeder 41 zugeordnet.

Das informationshalber mit der FIG. 2 beigefügte Fahrtdiagramm zeigt, daß ein Geschwindigkeitsbegrenzungssystem letzten Endes unter anderem auch eine wirtschaftliche Fahrweise erzwingt, indem über längere Zeiträume eine unruhige Fahrweise "geglättet" wird, d.h. Geschwindigkeitswechsel vermieden werden. Außerdem ist dem Diagramm zu entnehmen, daß der Fahrer in den Zeitbereichen 42 und 43 den Schalter 11 betätigt hat, um beispielsweise bei einer Fahrt auf einer Landstraße die maximal zulässige Geschwindigkeit zu halten, während im Zeitbereich 44 eine andere Straßenkategorie mit einer z. B. durch das Potentiometer 5 vorgegebenen Begrenzung befahren wurde.

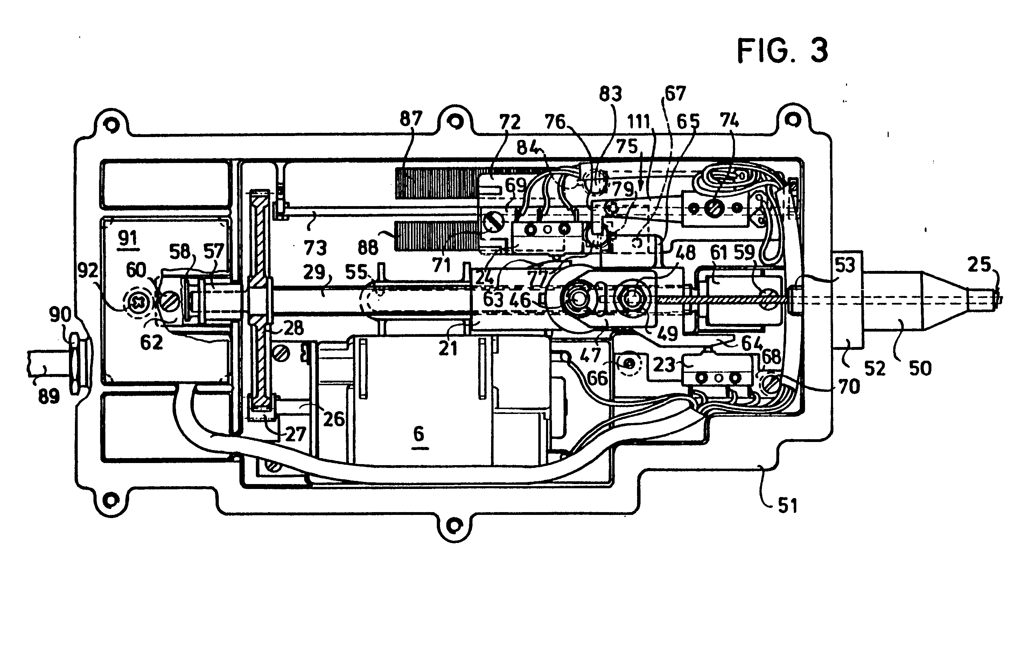

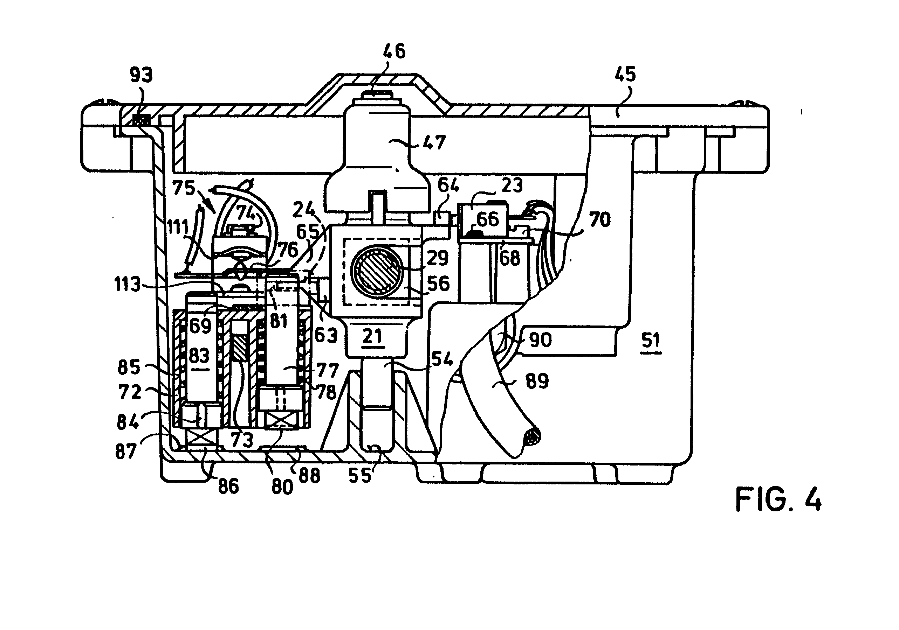

Die FIG. 3 zeigt bei abgenommenem Deckel 45 (FIG. 4) die Draufsicht eines bevorzugten Ausführungsbeispieles des Stellaggregates 3 mit den zur Durchführung des erfindungsgemäßen Positionierverfahrens vorgesehenen Mitteln, die sich bei Nullposition des Stellgliedes 21 in einer Ausgangsposition befinden.

Das Stellglied 21, das, wie bereits bei der Beschreibung der Prinzipdarstellung erwähnt, vom Stellmotor 6 über das auf dessen Welle 26 befestigte Zahnrad 27, dem mit diesem kämmenden Zahnrad 28 und die Gewindespindel 29 antreibbar ist, trägt, indem dieser auf eine am Stellglied 21 angeformte Aufnahme 46 aufgesetzt und in geeigneter Weise, möglicherweise mittels des Deckels 45, gesichert ist, einen Halter 47, in welchem mittels eines, einen Gewindeschaft 48 aufweisenden, jedoch nicht näher bezeichneten Spannstückes und einer dem Gewindeschaft 48 zugeordneten Mutter 49 die Seele des Bowdenzuges 25 festgehalten ist. Der Mantel des Bowdenzuges 25 stützt sich in an sich üblicher Weise mittels eines verstellbaren, durch eine Tülle 50 und eine die Tülle 50 am Gehäuse 51 des Stellaggregates 3 haltende Überwurfmutter 52 weitgehend verdec en Anschlages, dessen Schraubenschaft 5. .n der Wand des Gehäuses 51 gehaltert ist, ab.

Ein am Stellglied 21 befestigter Zapfen 54 (FIG. 4) dient, indem er in eine im Gehäuse 51 angeformte Führungsnut 55 eingreift, als Verdrehsicherung. Erwähnt sei ferner, daß das Stellglied 21 mittels zweier in das Stellglied 21 eingesetzter Führungsmuttern, von denen eine in FIG. 4 dargestellt und mit 56 bezeichnet ist, mit der Gewindespindel 29 in Eingriff steht und daß der Gewindespindel 29 auswechselbare Lagerbuchsen und Spurplatten - jeweils eine ist mit 57 und 58 bezeichnet - zugeordnet sind, welche in im Gehäuse 51 ausgeformte, nicht näher bezeichnete Kammern, die durch mittels Schrauben 59 und 60 befestigte Deckel 61 und 62 abgeschlossen sind, gehaltert sind. Am Stellglied 21 sind außerdem Schaltrampen 63 und 64, die den als Umschalter ausgebildeten Schaltern 23 und 24 zugeordnet sind, sowie ein Mitnehmer 65 angeformt. Die Schalter 23 und 24 sind, um sie quer zur Bewegungsrichtung der Schaltrampen 63 und 64 justieren zu können, auf jeweils um Achsen 66 und 67 verschwenkbaren Trägern 68 und 69 befestigt, die mittels Schrauben 70 und 71 feststellbar sind.

Wie die FIG. 3 weiter zeigt, ist der Träger 69 auf einem Schlitten 72 angeordnet, der auf einer in geeigneter, nicht näher bezeichneter Weise im Gehäuse 51 befestigten Führungsstange 73 mit, weil für den Schlitten 72 eine Verdrehsicherung realisiert sein muß, vorzugsweise rechteckförmigem Querschnitt verschiebbar gelagert ist. Ferner ist auf dem Schlitten 72 mittels einer Schraube 74 ein Umschaltkontaktsatz 75 befestigt, dessen Umschaltkontaktfeder 76 in die Bewegungsbahn eines im Schlitten 72 senkrecht zu dessen Transportrichtung bewegbar gelagerten Riegels 77 eingreift. Letzterer steht unter der Wirkung einer Druckfeder 78, ist mittels einer Steg-Schlitz-Verbindung 79 verdrehgesichert im Schlitten 72 geführt und weist an seiner einen Stirnseite eine Rastverzahnung 80 auf. Außerdem ist an dem Riegel 77 ein Schlitz 81 ausgebildet, in den in der dargestellten Position der Mitnehmer 65 des Stellgliedes 21 eingreift. Parallel hierzu ist im Schlitten 72 ein weiterer Riegel 83 gelagert. Dieser ist ebenfalls mittels einer Steg-Schlitz-Verbindung 84 verdrehgesichert und steht unter der Wirkung einer Druckfeder 85. Er ist jedoch derart angeordnet, daß die an seiner Stirnseite ausgebildete Rastverzahnung 86 entgegengesetzt gerichtet ist wie die des Riegels 77. Somit wirken beide Riegel 77 und 83 mit jeweils einer entgegengesetzt verzahnten, vorzugsweise am Boden des Gehäuses 51 ausgebildeten Rastbahn 87 und 88 zusammen.

Der Vollständigkeit halber sei noch erwähnt, daß der Kabelstrang 89, der mittels einer Hohlschraube 90 zugentlastet am Gehäuse 51 festgelegt ist, identisch ist mit der von der elektronischen Steuereinheit 2 abgehenden Leitung 7. Mit 91 ist eine Schaltungsplatte bezeichnet, die mittels einer Schraube 92 am Gehäuse 51 befestigt ist und einen Raum abdeckt, der für die auf der Schaltungsplatte 91 angeordneten, elektrischen Bauelemente der Motorbetriebsschaltung vorgesehen ist. Wie bereits erwähnt, ist dem Gehäuse 51 des Stellaggregates 3 ein Deckel 45 zugeordnet, d.h. unter Zwischenlage einer Dichtung 93 ist der Deckel 45 mit dem Gehäuse 51 an mehreren, nicht näher bezeichneten Stellen verschraubt.

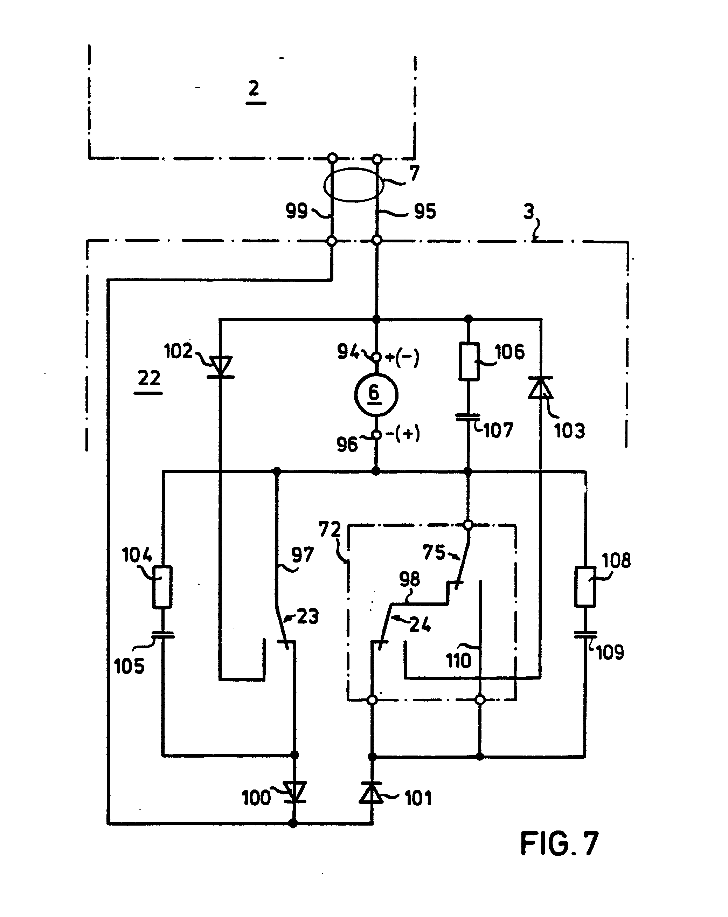

Bei der in FIG. 7 dargestellten Betriebsschaltung für den Stellmotor 6 ist die eine Klemme 94 des Stellmotors 6 unmittelbar mit dem einen Leitungszweig 95 der von der elektronischen Steuereinheit 2 ausgehenden Leitung 7 verknüpft, während die andere Klemme 96 des Stellmotors 6 über zwei parallel geschaltete Leitungszweige 97 und 98 mit dem anderen Leitungszweig 99 der Leitung 7 verbunden ist. In beiden Leitungszweigen 97 und 98 sind Dioden 100 und 101 derart wechselgerichtet eingeschaltet, daß ein auf der Leitung 99 anstehendes, positives Potential lediglich über den Leitungszweig 98 an die Klemme 96 des Stellmotors 6 gelangen kann. Über die Dioden 102 un 103 wird, wenn entweder die End- oder Nullposition des Stellgliedes 21 erreicht ist, der Stellmotor 6 kurzgeschlossen und somit exakt positioniert. Die RC-Kombinationen 104/105, 106/107 und 108/109 dienen in an sich bekannter Weise als Entstörglieder, während ein Leitungszweig 110 in einer bestimmten Stellung des Umschaltkontaktsatzes 75 den Endpositionsschater 24 überbrückt.

Für den in FIG. 7 dargestellten Schaltungszustand ist festgelegt, daß an der Klemme 96 des Stellmotors 6 negatives Potential ansteht und daß dann der Stellmotor 6 aus einer Abregelposition in eine Nullposition zurückläuft. Beim Erreichen der Nullposition wird der Schalter 23 betätigt und der Stellmotor 6 durch Kurzschließen gestoppt.

Steht andererseits wieder ein Abregelbefehl an, muß auf dem Leitungszweig 99 und somit über die im Leitungszweig 98 befindlichen und auf dem Schlitten 72 angeordneten Schalter 24 und 75 - letzterer dient lediglich der Überbrückung des Schalters 24 bei dessen Positionierung beim Einbau des Geschwindigkeitsbegrenzers 1 - an der Klemme 96 des Stellmotors 6 ein positives Potential bzw. positive Impulse anstehen, um den Stellmotor vorwärtszusteuern. Beim Anfahren des Stellmotors 6 in Vorwärtsrichtung wird gleichzeitig der Schalter 23 umgeschaltet und somit der Rücklauf des Stellmotors 6 vorbereitet. Erreicht der Stellmotor 6 die Endstellung, wird der Umschalter 24 betätigt, der Leitungszweig 98 unterbrochen, der Stellmotor 6 über die Diode 103 kurzgeschlossen und solange gestoppt bis auf den Leitungszweigen 95 und 99 eine Potentialumkehr erfolgt.

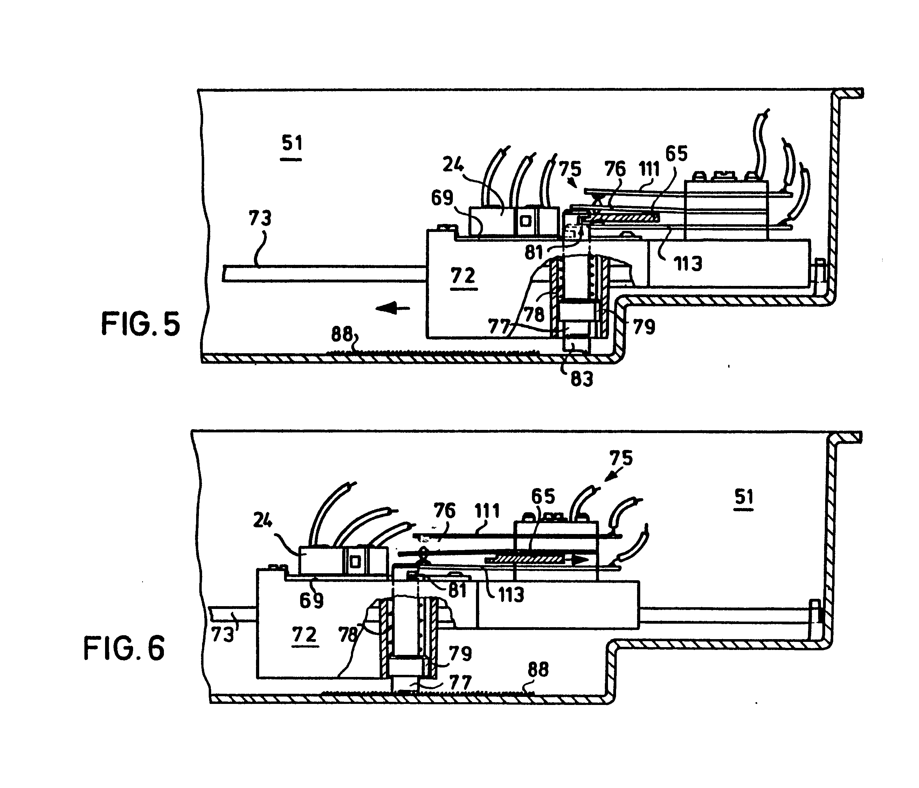

Sind die Komponenten des Geschwindigkeitsbegrenzers 1, die elektronische Steuereinheit 2, das Stellaggregat 3 und die Koppeleinrichtung 4 in dem betreffenden Fahrzeug montiert, so wird die erfindungsgemäße Positionierung des Schalters 24, ausgehend von dem in FIG. 3 dargestellten Anordnungszustand zwischen dem Stellglied 21 und dem Schlitten 72, bei dem der am Stellglied 21 angeformte Mitnehmer 65 in den im Riegel 77 befindlichen Schlitz 81 eingreift und somit der Riegel 77 mit der ihm zugeordneten Rastbahn 88 nicht in Eingriff steht bzw. beim Vorwärtsbewegen des Stellgliedes 21 gemäß dem Pfeil in FIG. 5 außer Eingriff mit der ihm zugeordneten Rastbahn 88 gehalten ist, dadurch vorbereitet, daß der dem Tastschalter 19 zugeordnete Stecker 17 in die in der elektronischen Steuereinheit 2 hierfür vorgesehene Aufnahme 114 gesteckt wird. Dadurch wird der Rücklauf des Stellmotors 6 gesperrt. Gleichzeitig wird die Möglichkeit geschaffen, mit dem Tastschalter 19 positives Potential auf den Leitungszweig 97 zu tasten. Ferner ist, abgesehen davon, daß, wie aus den FIG. 5 und 6 ersichtlich ist, der Schlitten 72 in einem gewissen für das Ineingriffbringen mit dem Stellglied 21 wünschenswerten Bereich frei verschiebbar ist, in dem dargestellten Positionierausgangszustand der Schalter 24 über die Schaltrampe 63 im Sinne von "Abschalten einer Vorwärtsbewegung des Stellgliedes 21" betätigt, gleichzeitig aber auch wirkungslos, weil die in die Bewegungsbahn des Riegels 77 eingreifende Umschaltkontaktfeder 76 mit einer im Leitungszweig 110 befindlichen Kontaktfeder 111 des Umschaltkontaktsatzes 75 im Sinne einer Überbrückung des Schalters 24 zusammenwirkt.

Ist dieser bis auf die Positionierung des Schalters 24 funktionsfertige Einbau des Geschwindigkeitsbegrenzers 1 abgeschlossen, begibt sich der Monteur in das Fahrerhaus, startet den Fahrzeugmotor, beobachtet eine Drehzahlanzeige, beispielsweise, wenn vorhanden, diejenige 112 des Fahrtschreibers 13, gibt zunehmend, um den Fahrzeugmotor nicht unnötig hochzudrehen, schrittweise mehr und mehr Gas und bedient den Tastschalter 19. Solange der Tastschalter 19 gedrückt ist, verschiebt der Stellmotor 6 den am Stellglied 21 angekoppelten Schlitten 72 und drosselt gleichzeitig die Kraftstoffzufuhr des Fahrzeugmotors 34. Erreicht das Gaspedal 33 die Vollgasstellung und wird es in dieser Stellung gehalten, so läßt sich die gewünschte Grenzdrehzahl, beispielsweise die Leerlaufdrehzahl, bei der später beim Fahrbetrieb der Abregelvorgang gestoppt werden soll, feinfühlig austasten. Durch nachfolgendes Ziehen des Steckers 17 wird der Justiermodus abgebrochen, d.h. die bereits während des Positioniervorganges V = 0 erkennende elektronische Steuereinheit 2 steuert negatives Potential auf den Leitungszweig 99, die Drehrichtung des Stellmotors 6 wird umgekehrt und das in die Nullposition zurücklaufende Stellglied 21 gibt sowohl den Schalter 24 als auch den Riegel 77 frei. Der Riegel 77 geht, wie FIG. 6 zeigt, in Eingriff mit der ihm zugeordneten Rastbahn 88 und fixiert zusammen mit dem bereits während des Positioniervorganges mit der Rastbahn 86 in Eingriff gewesenen und mitgeschleppten Riegels 83 die erreichte Position des Schlittens 72 und somit des Endschalters 24. Gleichzeitig wird auch der Umschaltkontaktsatz 75 betätigt, und der Schalter 24, in dem die Umschaltkontaktfeder 76 mit der im Leitungszweig 98 befindlichen Kontaktfeder 113 zusammenwirkt, aktiviert. Der Geschwindigkeitsbegrenzer ist einsatzbereit, wenn abschließend das Stellaggregat 3 und die Aufnahme 114 für den Stecker 17 in der elektronischen Steuereinheit 2 unzugänglich abgedeckt und plombiert sind.

## Patentansprüche

1. Verfahren zum Positionieren eines einem Geschwindigkeitsbegrenzer (1) zugeordneten Schalters (24), welcher den Stellmotor (6) des Geschwindigkeitsbegrenzers, der über ein Stellglied (21) eine in die getriebliche Verbindung zwischen dem Gaspedal (33) und der Kraftstoffzumeßvorrichtung eines Fahrzeugmotors (34) eingeschaltete Koppeleinrichtung (4) betätigt, dann abschaltet, wenn beim Abregelvorgang eine bestimmte, untere Grenzdrehzahl des Fahrzeugmotors (34), spätestens jedoch der durch die Koppeleinrichtung (4) ermöglichte maximale Relativhub zwischen Gaspedal (33) und Kraftstoffzumeßvorrichtung, erreicht ist, gekennzeichnet durch folgende Verfahrensschritte:

a) Starten des Fahrzeugmotors (34),

b) Treten des Gaspedals (33) bis zur Vollgasstellung und Halten des Gaspedals (33) in der Vollgasstellung bei gleichzeitigem Verstellen des Stellgliedes (21) im Sinne einer Drosselung des Fahrzeugmotors (34) durch Ansteuern des Stellmotors (6) mittels eines Tastschalters (19) und Beobachten einer Drehzahlanzeige (112),

c) Austasten eines einer bestimmten unteren Grenzdrehzahl des Fahrzeugmotors (34) entsprechenden Stellgliedhubes,

d) Freigabe einer Verriegelung (77, 88) des von dem Stellglied (21) mitgeschleppten Schalters (24) durch Umsteuern der Drehrichtung des Stellmotors (6).

2. Anordnung zur Durchführung des Verfahrens nach Anspruch 1,
dadurch gekennzeichnet,
daß der Schalter (24) auf einem parallel zu einer vom Stellmotor (6) angetriebenen und das Stellglied (21) tragenden Gewindespindel (29) verschiebbar gelagerten Schlitten (72) angeordnet ist,
daß dem Schlitten (72) Verriegelungsmittel zugeordnet sind,
daß auf dem Schlitten (72) ein in Reihe mit dem Schalter (24) geschalteter Umschaltkontaktsatz (75) angeordnet ist und
d) beim Positionieren des Schalters (24) mit .s des Tastschalters (19) das Stellglied (21) derart an dem Schlitten (72) angreift, daß der Schalter (24) betätigt, der Stromkreis des Schalters (24) über den Umschaltkontakttaktsatz (75) unterbrochen ist und die Verriegelungsmittel unwirksam sind.

3. Anordnung nach Anspruch 2,
dadurch gekennzeichnet,
daß an dem Schlitten (72) wenigstens ein Riegel (77) senkrecht zur Transportrichtung des Schlittens bewegbar, gefedert gelagert ist,
daß der Riegel (77) derart ausgebildet ist, daß er mit einem am Stellglied (21) ausgebildeten Mitnehmer (65) kuppelbar ist und
daß die Umschaltkontaktfeder (76) des Kontaktsatzes (75) in die senkrecht zur Transportrichtung des Schlittens (72) gerichtete Bewegungsbahn des Riegels (77) eingreift.

4. Anordnung nach Anspruch 2 und 3,
dadurch gekennzeichnet,
daß der Riegel (77) mit einer unmittelbar am Gehäuse (51) des Stellaggregates (3) ausgebildeten Rastbahn (88) zusammenwirkt.

5. Anordnung nach Anspruch 2, 3 und 4,
dadurch gekennzeichnet,
daß ein zweiter Riegel (83) und eine diesem zugeordnete Rastbahn (87) vorgesehen sind und
daß die Rastverzahnungen der beiden am Boden des Gehäuses (51) parallel nebeneinander ausgebildeten Rastbahnen (87) und (88) entgegengesetzt gerichtet sind.

6. Anordnung nach Anspruch 2,
dadurch gekennzeichnet,
daß der Schlitten (72) auf einer Führungsstange mit rechteckförmigem Querschnitt gelagert ist.

7. Anordnung zur Durchführung des Verfahrens nach Anspruch 1,
dadurch gekennzeichnet,
daß der Tastschalter (19), ein flexibles Kabel (18) und ein Stecker (17) eine geräteunabhängige Betätigungseinheit bilden,
daß in einer elektronischen Steuereinheit (2) des Geschwindigkeitsbegrenzers eine dem Stecker (17) zugeordnete, plombierbare Aufnahme (114) vorgesehen ist und
daß bei gesetztem Stecker (17) der Rücklauf des Stellmotors (6) gesperrt und der Vorlauf mittels des Tastschalters (19) steuerbar ist.

**Claims**

1. Method for positioning a switch (24) attributed to a speed limiting device (1) which switch switches off the setting motor (6) of a speed limiting device, which through a setting member (21) operates a coupling device (4) inserted in the driving connection between the accelerator (33) and the fuel delivery device of the vehicle motor (34) when in the course of the adjusting process a certain minimum number of revolutions of the vehicle motor (34) has been reached at the latest, however, when the maximum relative movement between the accelerator (33) and the fuel delivery device allowed by the coupling device (4) has been reached,
characterized by the following steps:
a) starting the vehicle motor (34),
b) operating the accelerator (33) to its full throttle position and retaining the accelerator (33) in the full throttle position whilst simultaneously setting the setting member (21) in the sense of reducing the vehicle motor (34) speed by operating the setting motor (6) by means of a sensing switch (19) and observing the number of revolutions indicator (112),
c) sensing a certain setting member movement corresponding to a certain minimum number of revolutions of the vehicle motor (34)
d) release of the locking member (77, 88) of the switch (24) actuated by the setting member (21) by reversing the direction of revolution of the setting motor (6).

2. Device for operating the method according to Claim 1, characterized in
that the switch (24) is mounted on a slide (72) driven by a threaded spindle (29) which is arranged and driven by the setting motor (6) parallelly to the setting member (21), that locking means are attributed to the slide (72), that on the slide (72) a set of switch over contacts (75) is arranged which is switched in series to the switch (24) and that when positioning the switch (24) by means of the sensing switch (19) the setting member (21) actuates the slide (72) in such manner that the switch (24) is operated, the circuit of the switch (24), however, is interrupted via the set of switch over contacts (75) and the locking means are ineffective.

3. Device according to Claim 2, characterized in
that at the slide (72) there is at least one locking member (77) movable vertically to the transport direction of the slide and under spring action,
that the locking member (77) is of such configuration that it may be coupled to a catching means (65) shaped at the setting member (21) and
that the switch over contact spring (76) of the contact set (75) reaches into the range of movement of the locking member (77) vertical to the transport direction of the slide (72).

4. Device according to Claims 2 and 3, chatactererized in
that the locking member (77) cooperates with an arresting path (88) arranged immediately at the housing (51) of the setting device (3).

5. Device according to Claims 2, 3 and 4, characterized in
that a second locking member (83) and an arresting path (87) attributed thereto are provided and
that the arresting toothings ofthe two arresting paths (87 and 88) arranged at the bottom of the housing (51) are directed in opposite directions.

6. Device according to Claim 2, characterized in
that the slide (72) is arranged on a guide rod with a square cross section.

7. Device for operating the method according to Claim 1,
characterized in
that the sensing switch (19), a flexible cable (18) and a plug (17) are an independent operating unit, that in an electronic control unit (2) of the speed limiting device a sealable recess attributed to the plug (17) is provided and
that when the plug (17) is set the reverse action of the setting motor (6) is blocked and the forward motion may be controlled by the sensing switch (19).

**Revendications**

1. Procédé pour le positionnement d'un interrupteur (24) associé à un limiteur de vitesse (1) qui coupe le servomoteur (6) du limiteur de vitesse, qui actionne, par l'intermédiaire d'un organe de réglage (21), un dispositif de couplage (4) inséré dans la liaison fonctionnelle entre la pédale d'accélérateur (33) et le dispositif doseur de carburant d'un moteur d'automobile (34), et cela lorsque, au cours d'un processus de réglage, une vitesse limite inférieure déterminée du moteur d'automobile (34) est atteinte mais, au plus tard, lorsque la course relative maximale autorisée par le dispositif de couplage (4) entre la pédale d'accélérateur (33) et le dispositif doseur de carburant est atteinte,

caractérisé par les phases de procédé suivantes:

a) démarrage du moteur d'automobile (34),

b) actionnement de la pédale d'accélératuer (33) jusqu'à la position de plein régime et maintenance de ladite pédale d'accélérateur (33) dans la position de plein régime avec ajustage simultané de l'organe de réglage (21) dans le sens d'une mise au ralenti du moteur d'automobile (34) par l'attaque du servomoteur (6) au moyen d'un bouton poussoir (19) et observation d'une indication de comptetours (112),

c) suppression d'une course de l'organe de réglage correspondant à une vitesse de rotation limite inférieure déterminée du moteur d'automobile (34),

d) déblocage d'un verrouillage (77, 88) de l'interrupteur (24) entraîné par l'organe de réglage (21) par l'inversion du sens de rotation du servomoteur (6).

2. Dispositif pour l'exécution du procédé selon la revendication 1,

caractérisé par le fait

que l'interrupteur (24) est disposé sur un chariot (72) monté mobile parallèlement à une broche filetée (29) entraînée par le servomoteur (6) et portant l'organe de réglage (21), que des moyens de verrouillage sont affecté au chariot (72), que sur ce chariot (72) est disposé un banc de contacts inverseurs (75) monté en série avec l'interrupteur (24) et que, lors du positionnement de l'interrupteur (24) au moven du bouton poussoir (19), l'organe de réglage (21) agit sur le chariot (72) de telle sorte que l'interrupteur (24) soit actionné, que le circuit électrique de l'interrupteur (24) soit coupé par l'intermédiaire du banc de contacts inverseurs (75), et que les moyens de verrouillage soient inefficaces.

3. Dispositif selon la revendication 2,

caractérisé par le fait

que sur le chariot (72) est monté sur ressort au moins un verrou (77) déplaçable perpendiculairement au sens de transport du chariot,

que ledit verrou (77) est réalisé de telle sorte qu'il puisse être accouplé avec un taquet d'entraînement (65) formé sur l'organe de réglage (21), et

que le ressort de contact inverseur (76) du banc de contacts (75) s'engage dans la trajectoire du verrou (77) dirigée perpendiculairement au sens de transport du chariot (72).

4. Dispositif selon l'une quelconque des revendications 2 et 3,

caractérisé par le fait

que le verrou (77) coopère avec une piste d'arrêt (88) réalisée directement sur le boîtier (51) de l'ensemble de régulation (3).

5. Dispositif selon l'une quelconque des revendications 2, 3 et 4,

caractérisé par le fait

qu'un deuxième verrou (83) et une piste d'arrêt (87) associée à celui-ci sont prévus et

que les dentures d'arrêt des deux pistes d'arrêt (87 et 88) formées parallèlement l'une à côté de l'autre sur le fond du boîtier (51) sont dirigées dans des sens opposés.

6. Dispositif selon la revendication 2,

caractérisé par le fait

que le chariot (72) est monté sur une barre de guidage de section rectangulaire.

7. Dispositif pour l'exécution du procédé selon la revendication 1,

caractérisé par le fait,

que le bouton poussoir (19), un câble souple (18) et un connecteur (17) constituent une unité d'actionnement indépendante de l'appareil,

que dans une unité de commande électronique (2) du limiteur de vitesse est prévu un prise (114) plombable associé au connecteur (17) et

qu'avec le connecteur (17) branché, le retour du servomoteur (6) est bloqué et que l'avance de celui-ci peut être commandée au moyen du bouton poussoir (19).

0 170 077

FIG. 1

FIG. 2

FIG. 3

FIG. 4

FIG. 5

51

24 75 76 111 65

69

73

72

81

77 78 79

113

88

83

FIG. 6

75

24 76 111 65

51

69

72 78 81

73 113

79

77 88

0 170 077

FIG. 7